# FASCICULE DE BREVET EUROPEEN

(11) **EP 0 566 430 B1**
(45) Date de publication et mention de la délivrance du brevet: **05.03.1997**
(21) Numéro de dépôt: 93400046.4
(22) Date de dépôt: 11.01.1993
(51) Int. Cl.: F16K 1/226

(54) **Vanne à joint métallique notamment vanne papillon**
Metalldichtung für ein Klappenventil
Metallic sealing for a butterfly valve

(30) Priorité: 15.01.1992 FR 9200353
(43) Date de publication de la demande: 20.10.1993
(73) Titulaire: GEC ALSTHOM-VELAN, 69367 Lyon Cedex 07 (FR)
(72) Inventeur: Mazel, Jean-Luc, F-69110 Sainte Foy Les Lyon (FR); Monnet, Gilbert, F-69600 Oullins (FR)
(74) Mandataire: Bourely, Paul

(56) Documents cités:
- EP-A- 0 292 346
- FR-A- 2 559 232
- PATENT ABSTRACTS OF JAPAN vol. 10, no. 193 (M-496)(2249) 8 Juillet 1986 & JP-A-61 038 268 ( TOMOE GIJUTSU KENKYUSHO ) 23 Février 1986

## Description

La présente invention concerne une vanne à joint métallique, notamment une vanne papillon munie d'un tel joint.

On sait que de telles vannes, et plus particulièrement celles destinées à être soumises à des conditions de service difficiles, par exemple les vannes pour fluides cryogéniques, doivent présenter, à côté d'une étanchéité statique par rapport au pourtour de leur corps, une étanchéité dynamique entre l'obturateur et une bague d'appui périphérique. Or, si l'on assure bien une étanchéité statique satisfaisante par écrasement d'un joint torique entre la bague d'appui et une partie du corps de vannes avec rebord formant limiteur d'écrasement, on n'obtient pas une étanchéité dynamique tout à fait satisfaisante, car le joint torique dynamique, destiné à subir la pression de l'obturateur, ne reste pas centré sur l'obturateur lors de la fermeture de celui-ci, ce qui entraîne des variations de la pression spécifique de contact entre l'obturateur et le joint dynamique, et par suite la possibilité de fuites en certains points du pourtour de celui-ci. Par ailleurs, il est difficile de se procurer des joints toriques présentant une résistance élastique suffisante (qui sera appelée ci-après "restitution") à l'écrasement par l'obturateur.

JP-A-6138268 décrit une vanne comprenant :
- un corps de vanne percé d'un orifice présentant un axe, ce corps incluant une bague d'appui entourant cet orifice,
- un joint d'étanchéité dit joint dynamique et s'appuyant sur cette bague d'appui par l'intermédiaire d'un élément à flexion élastique, une paroi externe de ce joint étant constituée d'un métal de contact,
- un opercule pour obturer cet orifice,
- un mécanisme pour déplacer cet opercule entre une position de passage permettant le passage d'un fluide à travers cet orifice et une position d'obturation dans laquelle une portée de cet opercule vient s'appuyer contre une zone de contact dudit joint dynamique en imposant à cette zone de contact un déplacement, ce déplacement s'accompagnant d'une déformation de ce joint et étant choisi pour engendrer des forces d'appui suffisantes pour permettre de réaliser une étanchéité entre cette portée et cette zone de contact, une amplitude de déplacement réversible de cette zone de contact étant liée aux possibilités de déformation élastique dudit métal de contact et étant limitée par le fait que ce métal doit être choisi pour que son contact avec cette portée réalise effectivement ladite étanchéité, l'élément à flexion a une forme en "V" en coupe radial. Cette forme en "V" ne permet pas une étanchéité optimale du fait que l'une des branches en "V" est libre.

La présente invention a pour but de proposer une vanne du type décrit ci-dessus ayant un élément à flexion élastique améliorant sensiblement l'étanchéité de la vanne.

A cet effet l'invention concerne une vanne du type décrit ci-dessus dans laquelle l'élément à flexion élastique intermédiaire entre le joint dynamique et la bague d'appui est un sommier présentant la forme d'une couronne entourant ledit orifice et ayant deux bords en appui contre cette bague d'appui, ce joint dynamique s'appuyant sur ce sommier selon une ligne intermédiaire entre ces deux bords de manière que la flexion d'une ligne de section plane axiale de ce sommier augmente ladite amplitude de déplacement réversible de la zone de contact du joint dynamique.

Outre ces caractéristiques essentielles, d'autres perfectionnements selon l'invention permettant d'en améliorer l'efficacité sont définis ci-après :
- la bague d'appui est munie d'une portée oblique de soutien du joint dynamique à l'encontre des efforts auxquels il est soumis,
- la paroi externe du joint dynamique est formée par incurvation d'un bord dit "dynamique" d'une membrane d'étanchéité annulaire dont l'autre bord dit "statique" se raccorde de manière étanche audit corps de vanne.
- la membrane d'étanchéité comporte une bande annulaire dite "dynamique" dont la section plane axiale s'étend obliquement d'une ligne d'incurvation jusqu'au dit joint dynamique en restant à distance dudit corps de vanne, cette ligne d'incurvation étant intermédiaire entre les deux dits bords dynamique et statique, cette membrane comportant en outre une bande annulaire dite "statique" dont la section plane axiale s'étend radialement de cette ligne d'incurvation jusqu'au dit bord statique de cette membrane, cette bande statique étant maintenue en appui contre des surfaces dudit corps de vanne.
- le bord statique de la membrane d'étanchéité est incurvé pour former la paroi externe d'un joint d'étanchéité dit joint statique, ladite bande statique et ce joint étant interposés entre ladite bague d'appui et un épaulement interne dudit corps de vanne, des moyens de serrage appuyant cette bague contre cet épaulement en déformant ce joint et en enserrant cette bande.
- la section plane axiale dudit sommier présente une convexité vers ledit joint dynamique de manière à éviter un contact de ce sommier avec ladite membrane d'étanchéité.
- le joint dynamique comporte des éléments de soutien interne de joint qui sont élastiquement déformables et qui s'appuient contre la surface intérieure de sa paroi externe pour que ledit déplacement de la zone de contact de ce joint s'accompagne d'une déformation limitée de ce joint tout en engendrant lesdites forces d'appui suffisantes même après de nombreuses ouvertures et fermetures de cette vanne.
- la portée de l'opercule est métallique et vient s'appuyer avec frottement contre ladite zone de contact du joint d'étanchéité, ledit métal de contact étant choisi en outre pour éviter un risque de grippage de cette paroi contre cette portée.
- le sommier élastiquement flexible est constitué d'un métal plus dur que le métal de la zone de contact du joint dynamique d'étanchéité.

Il est décrit ci-après, à titre d'exemple et en référence aux figures du dessin annexé, une vanne papillon à joint métallique selon l'invention.

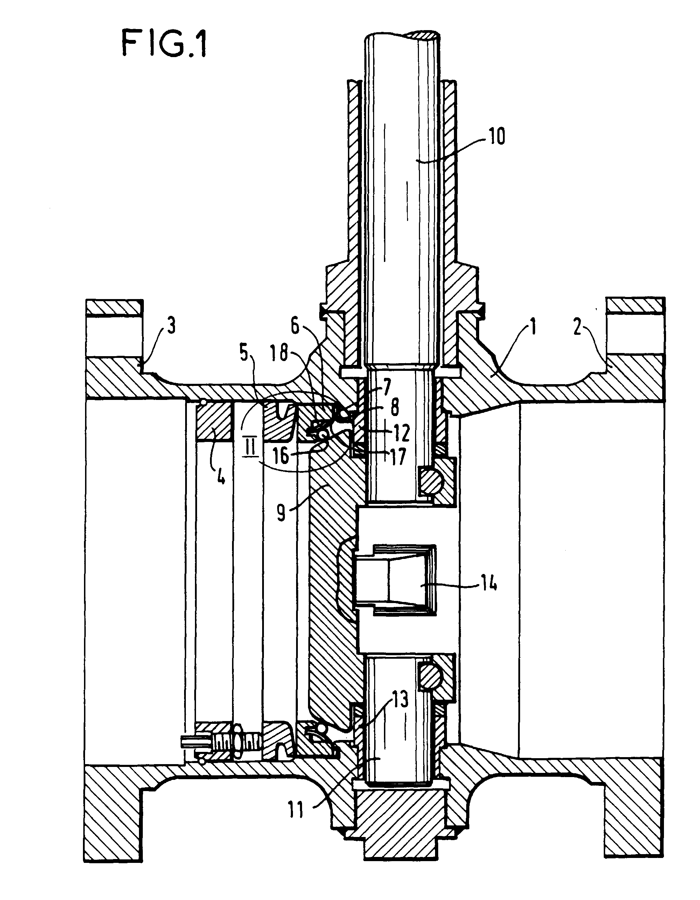

La figure 1 représente l'ensemble de la vanne en coupe par un plan diamétral, en position de fermeture.

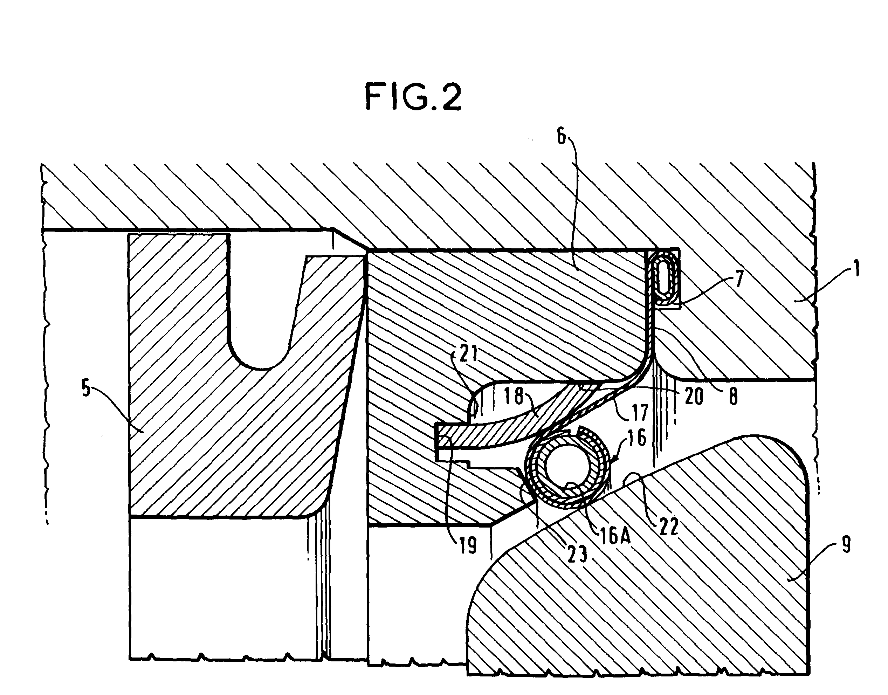

La figure 2 représente à échelle agrandie le détail II de la figure 1.

Dans les figures, le corps de vanne 1 est compris entre les brides de fixation 2 et 3. Le sens de déplacement du fluide peut être bidirectionnel. La vanne comporte dans sa partie aval une bague de serrage 4 et une bague de transfert 5. La bague d'appui 6 vient serrer le joint torique d'étanchéité statique 7, l'écrasement de ce dernier étant limité par un épaulement 8 du corps de vanne.

L'opercule 9 de la vanne a son déplacement commandé par la tige de commande 10, qui tourne dans le palier 12, sa rotation étant guidée par les bagues 12, 13 et limitée par la butée d'opercule 14.

Le joint torique d'étanchéité dynamique 16 fait partie d'une lame formée métallique 17 dont l'autre extrémité est formée par le joint torique d'étanchéité statique 7. Il est serré par le bord de l'opercule sur une zone de contact variable en fonction du degré de fermeture de la vanne, et vient en appui du côté opposé à cette zone de contact sur la coupelle formant sommier 18, de convexité tournée vers ce joint, et dont les bords 19 et 20 sont eux-mêmes en appui sur des faces planes respectivement perpendiculaire et parallèle à l'axe de la vanne d'une rainure circonférentielle 21 de la bague d'appui 6. Cette coupelle est de préférence en un métal plus dur que celui de la lame métallique 17.

Le joint d'étanchéité dynamique 16 comporte de préférence un élément torique de soutien interne 16A élastiquement déformable, permettant que le déplacement de la zone de contact du joint contre l'opercule ne s'accompagne que d'une déformation limitée de ce joint, tout en engendrant une force d'appui suffisante.

Le joint dynamique 16 est en contact dans la position de fermeture avec la portée oblique 23 de la bague d'appui 6, qui coopère avec le sommier 18 pour supporter les efforts auxquels est soumis le joint et assurer son maintien lorsqu'il est soumis à des pressions importantes.

L'effort de serrage du joint dynamique 16 est obtenu par sa déformation lors de sa mise en contact avec l'obturateur en position de fermeture. La restitution élastique de la fonction d'étanchéité est assurée d'une part par la restitution propre de ce joint, d'autre part par la coupelle 18 sur laquelle il prend appui. Cette dernière assure en outre l'autocentrage du joint torique dynamique sur l'obturateur, et par là l'uniformisation des pressions spécifiques de contact entre le joint et l'obturateur.

Par ailleurs, l'axe de rotation de la tige de commande 10 est décalé de quelques millimètres par rapport à l'axe de symétrie du logement dans le corps de vanne, de façon à limiter le frottement entre le joint dynamique et l'obturateur lors de la fin de la phase de fermeture ou du début de la phase d'ouverture de la vanne.

## Revendications

1. Vanne à joint métallique comportant :
- un corps de vanne (1) percé d'un orifice présentant un axe, ce corps incluant une bague d'appui (6) entourant cet orifice,
- un joint d'étanchéité dit joint dynamique (16) et s'appuyant sur cette bague d'appui (6) par l'intermédiaire d'un élement à flexion élastique (18), une paroi externe de ce joint (16) étant constituée d'un métal de contact,
- un opercule (9) pour obturer cet orifice,
- un mécanisme pour déplacer cet opercule (9) entre une position de passage permettant le passage d'un fluide à travers cet orifice et une position d'obturation dans laquelle une portée (22) de cet opercule (9) vient s'appuyer contre une zone de contact dudit joint dynamique (16) en imposant à cette zone de contact un déplacement, ce déplacement s'accompagnant d'une déformation de ce joint (16) et étant choisi pour engendrer des forces d'appui suffisantes pour permettre de réaliser une étanchéité entre cette portée (22) et cette zone de contact, une amplitude de déplacement réversible de cette zone de contact étant liée aux possibilités de déformation élastique dudit métal de contact et étant limitée par le fait que ce métal doit être choisi pour que son contact avec cette portée (22) réalise effectivement ladite étanchéité,
cette vanne étant caractérisée par le fait que ledit élément à flexion élastique intermédiaire entre le joint dynamique (16) et la bague d'appui (6) est un sommier (18) présentant la forme d'une couronne entourant ledit orifice et ayant deux bords (19, 20) en appui contre cette bague d'appui, ce joint dynamique (16) s'appuyant sur ce sommier selon une ligne intermédiaire entre ces deux bords (19,20) de manière que la flexion d'une ligne de section plane axiale de ce sommier (18) augmente ladite amplitude de déplacement réversible de la zone de contact du joint dynamique (16).

2. Vanne selon la revendication 1, dans laquelle la bague d'appui (6) est munie d'une portée oblique (23) de soutien du joint dynamique (16) à l'encontre des efforts auxquels il est soumis.

3. Vanne selon les revendications 1 ou 2, dans laquelle ladite paroi externe du joint dynamique (16) est formée par incurvation d'un bord dit "dynamique" (16) d'une membrane d'étanchéité annulaire (17) dont l'autre bord dit "statique" (7) se raccorde de manière étanche audit corps de vanne.

4. Vanne selon la revendication 3, caractérisée par le fait que ladite membrane d'étanchéité (17) comporte une bande annulaire dite "dynamique" dont la section plane axiale s'étend obliquement d'une ligne d'incurvation jusqu'au dit joint dynamique (16) en restant à distance dudit corps de vanne (1) , cette ligne d'incurvation étant intermédiaire entre les deux dits bords dynamique et statique, cette membrane (17) comportant en outre une bande annulaire dite "statique" (7) dont la section plane axiale s'étend radialement de cette ligne d'incurvation jusqu'au dit bord statique de cette membrane, cette bande statique étant maintenue en appui contre des surfaces dudit corps de vanne (1).

5. Vanne selon la revendication 4, dans laquelle ledit bord statique de ladite membrane est incurvé pour former la paroi externe d'un joint d'étanchéité dit joint statique (7), ladite bande statique et ce joint étant interposés entre ladite bague d'appui (6) et un épaulement interne (8) dudit corps de vanne (1) , des moyens de serrage appuyant cette bague (6) contre cet épaulement (8) en déformant ce joint (7) et en enserrant cette bande.

6. Vanne selon la revendication 3, caractérisée par le fait que la section plane axiale dudit sommier (18) présente une convexité vers ledit joint dynamique (16) de manière à éviter un contact de ce sommier (18) avec ladite membrane d'étanchéité (17).

7. Vanne selon les revendications 1 ou 2, dans laquelle ledit joint dynamique (16) comporte des éléments (16A) de soutien interne de joint qui sont élastiquement déformables et qui s'appuient contre la surface intérieure de sa paroi externe pour que ledit déplacement de la zone de contact de ce joint s'accompagne d'une déformation limitée de ce joint tout en engendrant lesdites forces d'appui suffisantes même après de nombreuses ouvertures et fermetures de cette vanne.

8. Vanne selon les revendications 1 ou 2, dans laquelle ladite portée de l'opercule (9) est métallique et vient s'appuyer avec frottement contre ladite zone de contact du joint d'étanchéité, ledit métal de contact étant choisi en outre pour éviter un risque de grippage de cette paroi contre cette portée (22).

9. Vanne selon les revendications 1 ou 2, caractérisée par le fait que ledit sommier (18) est en un métal plus dur que ledit métal de contact.

## Patentansprüche

1. Ventil mit Metalldichtung und
- mit einem Ventilkörper (1), der eine Öffnung entlang einer Achse besitzt, und mit einem die Öffnung umgebenden Stützring (6),
- mit einem dynamischen Dichtungsring (16), der sich auf diesem Stützring (6) über ein elastisch verbiegbares Element (18) abstützt, wobei eine Außenwand dieses Dichtungsrings (16) von einem Kontaktmetall gebildet wird,
- mit einem Verschlußglied (9) für diese Öffnung,
- mit einem Mechanismus zur Verschiebung des Verschlußglieds (9) zwischen einer Durchlaßstellung, bei der ein Fluid durch die Öffnung strömen kann, und einer Verschlußstellung, in der eine Auflagefläche (22) des Verschlußorgans (9) an einer Kontaktzone der dynamischen Dichtung (16) anliegt, indem sie diese Kontaktzone verschiebt, wobei diese Verschiebung von einer Verformung der Dichtung (16) begleitet wird und so gewählt ist, daß ausreichend große Auflagekräfte erzeugt werden, um eine Dichtung zwischen dieser Auflagefläche (22) und der Kontaktzone zu gewährleisten, wobei eine umkehrbare Verschiebungsamplitude dieser Kontaktzone mit den Möglichkeiten der elastischen Verformung des Kontaktmetalls verknüpft und durch die Tatsache begrenzt ist, daß dieses Metall so gewählt werden muß, daß sein Kontakt mit dieser Auflagefläche (22) die Abdichtung tatsächlich gewährleistet,
dadurch gekennzeichnet, daß das elastisch verbiegbare Element zwischen der dynamischen Dichtung (16) und dem Stützring (6) ein Auflager (18) in Form eines die Öffnung umgebenden Reifs ist, dessen beide Ränder (19, 20) am Stützring anliegen, wobei die dynamische Dichtung (16) sich auf diesem Auflager gemäß einer zwischen den beiden Rändern (19, 20) verlaufenden Linie so abstützt, daß die Verbiegung einer Linie in axialem Schnitt durch dieses Auflager (18) die Amplitude der reversiblen Verschiebung der Kontaktzone der dynamischen Dichtung (16) vergrößert.

2. Ventil nach Anspruch 1, in dem der Stützring (6) eine schräge Anlagefläche (23) für die dynamische Dichtung (16) gegen die Kräfte besitzt, denen die dynamische Dichtung unterliegt.

3. Ventil nach Anspruch 1 oder 2, in dem die äußere Wand der dynamischen Dichtung (16) durch die Krümmung eines "dynamischen" Rands (16) einer ringförmigen Dichtungsmembran (17) gebildet wird, deren anderer, "statischer" Rand (7) dicht an das Ventilgehäuse anschließt.

4. Ventil nach Anspruch 3, dadurch gekennzeichnet, daß die Dichtmembran (17) ein ringförmiges "dynamisches" Band enthält, das sich im axialen Schnitt schräg von einer Krümmungslinie bis zur dynamischen Dichtung (16) erstreckt, wobei es einen Abstand zum Ventilgehäuse (1) hält und wobei die Krümmungslinie zwischen dem dynamischen und dem statischen Rand liegt, und daß die Membran (17) weiter ein ringförmiges statisches Band (7) besitzt, das sich im Axialschnitt radial von dieser Krümmungslinie bis zum statischen Rand der Membran erstreckt und gegen Oberflächen des Ventilgehäuses (1) gedrückt gehalten wird.

5. Ventil nach Anspruch 4, in dem der statische Rand der Membran so gekrümmt ist, daß er die Außenwand einer statischen Dichtung (7) bildet, wobei das statische ringförmige Band und diese Dichtung zwischen den Stützring (6) und eine Innenschulter (8) des Ventilgehäuses eingefügt sind und Spannmittel diesen Ring (6) gegen die Schulter (8) unter Verformung dieser Dichtung (7) und unter Einspannung des Bands drücken.

6. Ventil nach Anspruch 3, dadurch gekennzeichnet, daß der Reif (18) im axialen Schnitt zur dynamischen Dichtung (16) hin konvex gekrümmt ist, um einen Kontakt dieses Reifs (18) mit der Dichtmembran (17) zu vermeiden.

7. Ventil nach Anspruch 1 oder 2, in dem die dynamische Dichtung (16) interne Stützelemente (16A) zur Abdichtung enthält, die elastisch verformbar sind und sich gegen die innere Oberfläche ihrer Außenwand anlegen, damit die Verschiebung der Kontaktzone dieser Dichtung von einer begrenzten Verformung der Dichtung begleitet wird und doch ausreichende Anpreßkräfte auch noch nach zahlreichen Öffnungs- und Schließzyklen des Ventils erzeugt werden.

8. Ventil nach Anspruch 1 oder 2, in dem die Auflagefläche des Verschlußglieds (9) aus Metall ist und unter Reibung gegen die Kontaktzone der Dichtung anliegt, wobei das Kontaktmetall außerdem so gewählt ist, daß die Gefahr eines Festfressens dieser Wand an der Auflagefläche (22) vermieden wird.

9. Ventil nach Anspruch 1 oder 2, dadurch gekennzeichnet, daß der Reif (18) aus härterem Metall als das Kontaktmetall ist.

## Claims

1. A valve having a metal seal and comprising:
a valve body (1) pierced by an orifice having an axis, said body including a thrust ring (6) surrounding said orifice;
a "dynamic" sealing ring (16) bearing against said thrust ring via (6) a elastically bendable element (18), with an outside wall of said sealing ring (16) being constituted by a contact metal;
a closure member (9) to close said orifice; and
a mechanism for displacing said closure member (9) between an open position allowing a fluid to pass through said orifice and a closed position in which a bearing surface (22) of said closure (9) member bears against a contact zone of said dynamic sealing ring (16) causing said contact zone to be displaced, said displacements being accompanied by deformation of said sealing ring (16), and being selected to generate thrust forces that are sufficient to enable sealing to be established between said bearing surface (22) and said contact zone, an amplitude of reversible displacement of said contact zone being related to the elastic deformation capabilities of said contact metal and being limited by the fact that said metal must be selected so that its contact with said bearing surface (22) effectively achieves said sealing;
said valve being characterized by the fact that said elastically bendable element intermediate between the dynamic sealing ring (16) and the thrust ring (6) is a support piece (18) in the form of a ring surrounding said orifice and having two edges (19, 20) bearing against said thrust ring, said dynamic sealing ring (16) bearing against said support piece along a line intermediate between said two edges (19, 20) whereby the bending of an axial plane section line of said support piece (18) increases said reversible displacement amplitude of the contact zone of the dynamic sealing ring (16).

2. A valve according to claim 1, in which the thrust ring (6) is provided with a sloping bearing surface (23) for supporting the dynamic sealing ring (16) against the forces to which it is subjected.

3. A valve according to claim 1 or 2, in which said external wall of the dynamic sealing ring (16) is formed by curving a "dynamic" edge (16) of an annular sealing membrane (17) whose "static" other edge (7) is connected in sealed manner to the body of the valve.

4. A valve according to claim 3, characterized by the fact that said sealing membrane (17) includes a "dynamic" annular strip whose axial plane section extends obliquely from a curved line to said dynamic sealing ring (16) while remaining at a distance from said valve body (1), said curved line being intermediate between said dynamic and static edges, said membrane (17) further including a "static" annular strip (7) whose axial plane section extends radially from said curved line to the "static" edge of said membrane, said static strip being held pressed against the surfaces of said valve body (1).

5. A valve according to claim 4, in which said static edge of said membrane is curved to form the outer wall of a "static" sealing ring (7), said static strip and said sealing ring being interposed between said thrust ring (6) and an internal shoulder (8) of said valve body (1), clamping means urging said thrust ring (6) against said shoulder (8), thereby deforming the sealing ring (7) and surrounding said strip.

6. A valve according to claim 3, characterized by the fact that the axial plane section of said support piece (18) is convex towards said dynamic sealing ring (16) in such a manner as to avoid contact between said support member (18) and said sealing membrane (17).

7. A valve according to claim 1 or 2, in which said dynamic sealing ring (16) includes internal support elements (16A) for the sealing ring which are elastically deformable and which bear against the inside surface of its outer wall so that said displacement of the contact zone of said sealing ring is accompanied by limited deformation of said sealing ring while nevertheless generating said thrust forces of sufficient magnitude even after said valve has been opened and closed many times.

8. A valve according to claim 1 or 2, in which said bearing surface of the closure member (9) is made of metal and bears with friction against said contact zone of the sealing ring, said contact metal being additionally selected to avoid any risk of said wall seizing against said bearing surface (22).

9. A valve according to claim 1 or 2, characterized by the fact that said support piece (18) is made of a metal that is harder than said contact metal.
